# EUROPÄISCHE PATENTSCHRIFT

(11) **EP 0 811 799 B1**
(45) Veröffentlichungstag und Bekanntmachung des Hinweises auf die Patenterteilung: **22.09.1999**
(21) Anmeldenummer: 97104909.3
(22) Anmeldetag: 22.03.1997
(51) Int. Cl.: F16L 41/06, F16L 47/00

(54) **Ventil-Anbohrarmatur für vorzugsweise unter Mediendruck stehende Versorgungsleitungen aus Kunststoff**
Tapping device with valve for supply plastic pipes under pressure
Appareil de perçage avec vanne pour tuyaux de distribution à fluide sous pression en matière plastique

(30) Priorität: 08.06.1996 DE 19623004
(43) Veröffentlichungstag der Anmeldung: 10.12.1997
(73) Patentinhaber: MANIBS Spezialarmaturen GmbH & Co. KG, D-42859 Remscheid (DE)
(72) Erfinder: Schafstein, Jürgen, 42859 Remscheid (DE)
(74) Vertreter: Mentzel, Norbert, Dipl.-Phys.

(56) Entgegenhaltungen:
- DE-A- 2 505 098
- DE-A- 3 744 693
- DE-A- 19 531 913

## Beschreibung

Die Erfindung richtet sich auf eine Anbohrarmatur der im Oberbegriff des Anspruches 1 angegebenen Art. An bestimmten Stellen von verlegten Kunststoffleitungen, die als Medium z. B. Gas oder Wasser führen, ist im nachhinein der Anschluß von Hauseinführungen zu vollziehen. Dazu muß die Leitung an dieser Stelle angebohrt werden, wofür man derartige Anbohrarmaturen verwendet.

Die bekannte Anbohrarmatur (DE 195 31 913.3 A1) erlaubt zugleich eine Verwendung als Ventil, wenn man am Unterende des Hauptrohres eine Ventil-Dichtstelle und am Anbohrwerkzeug eine Ventil-Gegendichtstelle vorsieht. Man braucht dann nur auf das Hauptrohr einen vormontierten Ventilaufsatz zu versehen, der aus einer Kappe mit darin drehgelagerter Spindel besteht. In das Anbohrwerkzeug wird ein hülsenförmiger Adapter über eine verrastbare Steckkupplung gesteckt. Die Spindel gleitet beim Verschrauben des Anbohrwerkzeugs axial frei im Inneren des hülsenförmigen Adapters, ist damit aber drehfest verbunden.

Bei der bekannten Ventil-Anbohrarmatur ergeben sich nach dem Anbohren Abdichtungsprobleme, wenn die Armatur als Ventil benutzt werden soll. Der im zylindrischen Anbohrwerkzeug sitzende Bohrkern bringt nämlich keine ausreichende Mediendichtigkeit gegenüber dem hohen Mediendruck in der angebohrten Versorgungsleitung. Diese Dichtungsprobleme sind durch Dichtmittel im Bereich der Kappe nicht befriedigend zu lösen.

Der Erfindung liegt die Aufgabe zugrunde, eine preiswerte Ventil-Anbohrarmatur der im Oberbegriff des Anspruches 1 genannten Art zu entwickeln, die sich durch eine leichte Handhabung und zuverlässige Dichtigkeit auszeichnet. Dies wird erfindungsgemäß durch die im Anspruch 1 angeführten Maßnahmen erreicht, denen folgende besondere Bedeutung zukommt.

Bei der Erfindung besitzt der Adapter keine durchgehende Bohrung, sondern ein Sackloch, in das die Spindel beim Auf- und Abschrauben des Anbohrwerkzeugs mehr oder weniger axial einfährt. Das Unterende des Adapters ist geschlossen. Das Hülseninnere ist also mit Sicherheit einwandfrei mediendicht. Aber auch die Steckkupplung zwischen dem Anbohrwerkzeug und dem Adapter zeichnet sich durch eine Mediendichtigkeit aus, weil hier Dichtmittel vorgesehen sind. Diese bestehen vorzugsweise aus einem am Unterende des Adapters vorgesehenen Dichtring, der mit einer radialen Anlagefläche im Anbohrwerkzeug zur Anlage kommt.

Vor dem Anbohren ist es möglich, mit der erfindungsgemäßen Anbohrarmatur bequem eine Druckprobe auszuführen, um festzustellen, ob der Anschluß der Hausleitung an das Nebenrohr und die Schweißbefestigungsstelle des Armaturgehäuses an der Umfangsfläche der Versorgungsleitung einwandfrei dicht sind. Dazu braucht lediglich der Adapter entfernt zu werden, während das eine durchgehende Zylinderbohrung aufweisende Anbohrwerkzeug im Innengewinde des Hauptrohres montiert bleibt. Durch Anschluß einer Druckquelle und eines Manometers am Hauptrohr ist somit die Druckprobe über das Innere des Anbohrwerkzeugs sowohl am Armaturengehäuse als auch an der angeschlossenen Hausleitung möglich.

Weitere Maßnahmen und Vorteile der Erfindung ergeben sich aus den Unteransprüchen, der nachfolgenden Beschreibung und denn Zeichnungen. In den Zeichnungen ist die Erfindung in einem Ausführungsbeispiel dargestellt. Es zeigen:
- Fig. 1: einen Axialschnitt durch eine komplette Ventil-Anbohrarmatur nach der Erfindung, die an einer noch anzubohrenden Stelle der Versorgungsleitung durch Schweißen befestigt ist,
- Fig. 2: die in Fig. 1 gezeigte Ventil-Anbohrarmatur nach Vollzug des Anbohrens der Versorgungsleitung, wobei auch die Ventilwirkung im Bereich der Bohrstelle erkennbar ist,
- Fig. 3: in Explosionsdarstellung und größerem Maßstab zwei maßgebliche Bauteile aus dem Inneren der in Fig. 1 gezeigten Anbohrarmatur im Entkupplungsfall,
- Fig. 4: die Bauteile von Fig. 3 im Kupplungsfall, wobei nur der untere Teil im Axialschnitt gezeigt ist, während der obere in Außenansicht erscheint,
- Fig. 5: in noch stärkerer Vergrößerung ein weiteres Detail des in Fig. 4 mit V gekennzeichneten Bereichs, und
- Fig. 6: die Anbohrarmatur, ohne Ventilfunktion, wie sie bei der Druckprobe nach ihrer Befestigung an der Versorgungsleitung und Anschluß einer Hausleitung vorliegt.

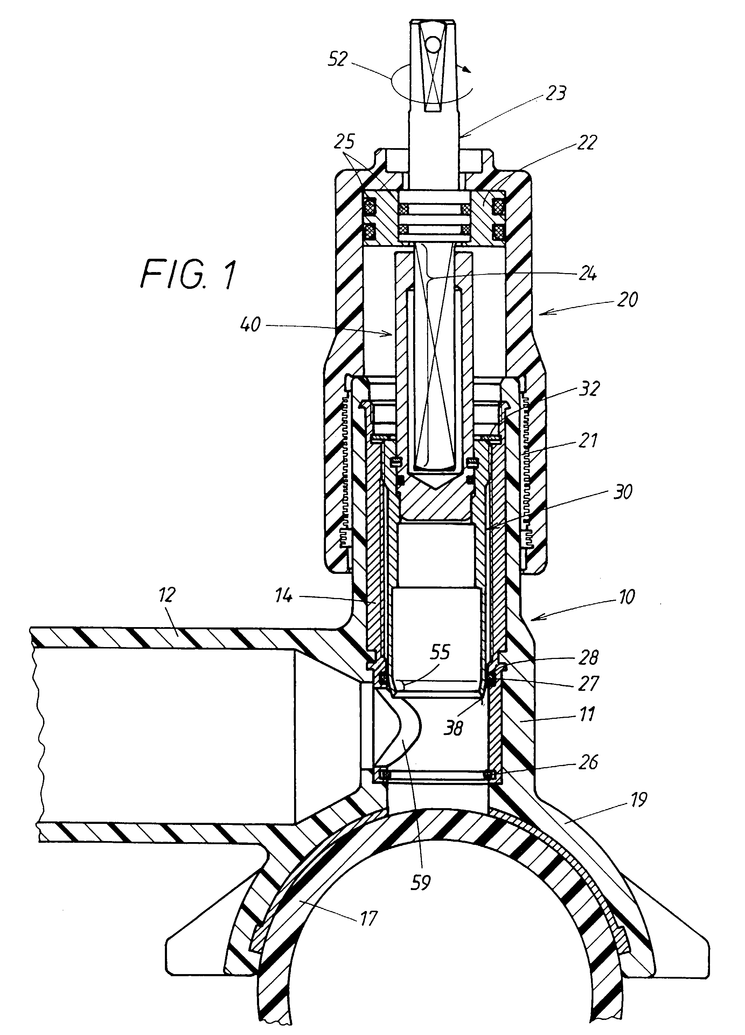

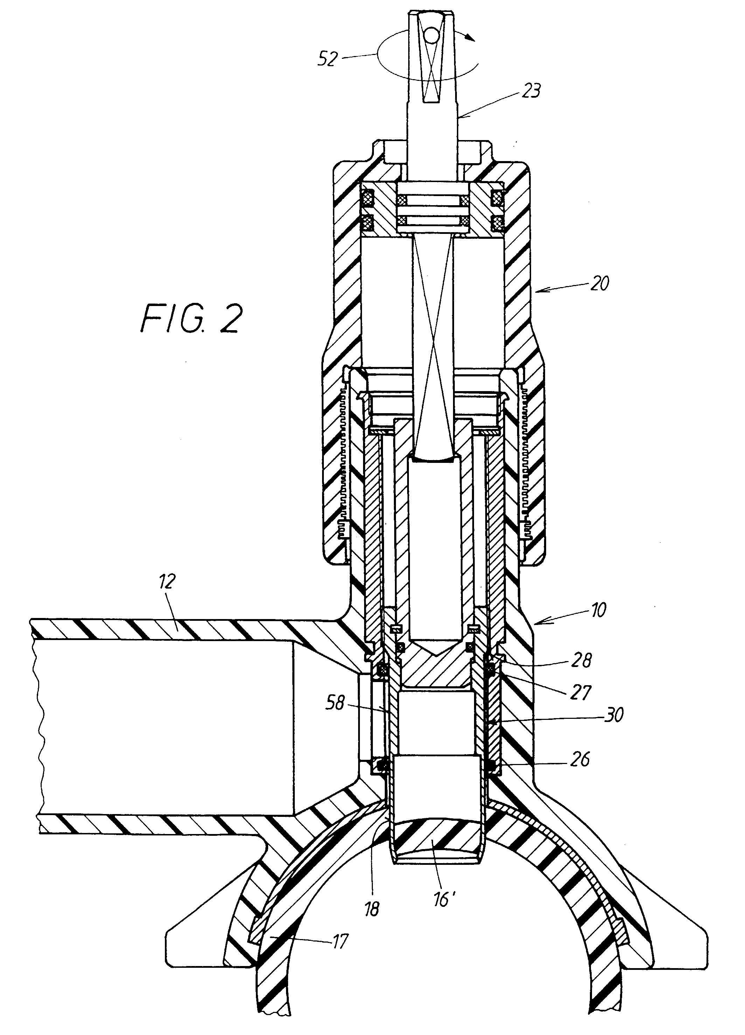

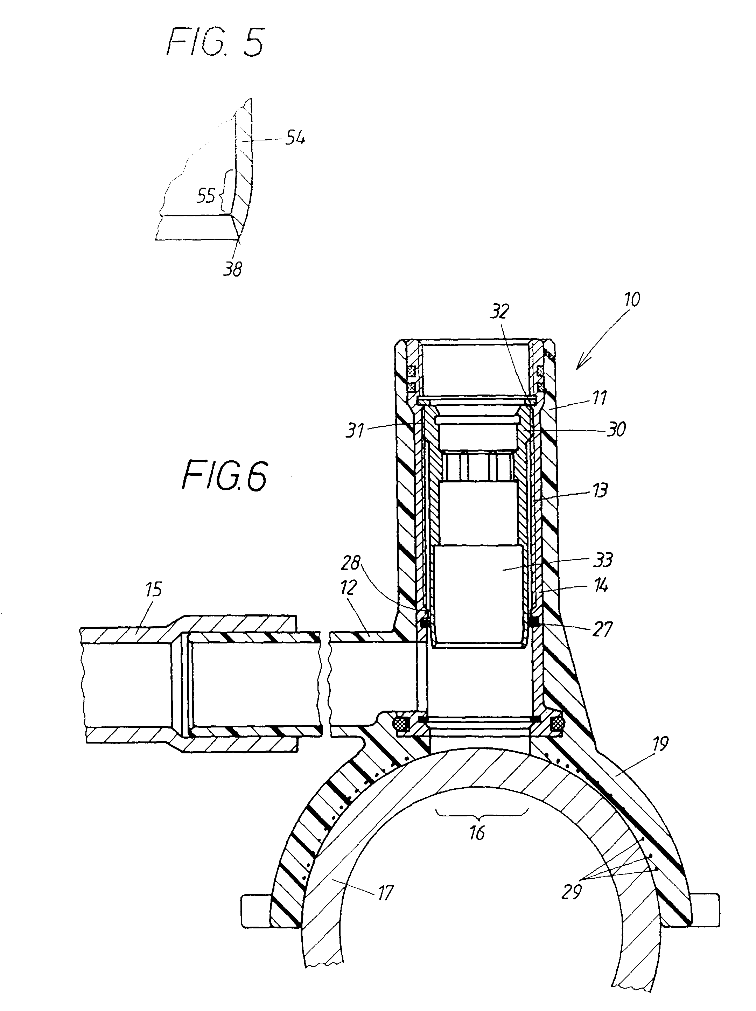

Die in Fig. 1 und 2 gezeigte Ventil-Anbohrarmatur umfaßt ein zweiteiliges Ventilgehäuse, nämlich das Gehäuse 10 einer in Fig. 6 gezeigten einfachen Anbohrarmatur und die Kappe 20 eines in Fig. 1 erkennbaren vormontierten Ventilaufsatzes. Das Armaturgehäuse 10 von Fig. 6 umfaßt ein mit einem Innengewinde 13 versehenes Hauptrohr 11 und ein abgewinkelt dazu verlaufendes Nebenrohr 12, das an eine bruchstückhaft erkennbare Hauseinführung 15 über eine Rohr-Schweißverbindung od. dgl. angeschlossen ist. Das Gehäuse 10 besteht aus Kunststoff. Das Innengewinde 13 ist aber Bestandteil einer mit dem Kunststoff im Hauptrohr 11 fest verbundenen metallischen Gewindehülse 14.

Es geht darum, an einer definierten Stelle 16 einer unter Mediendruck stehenden Versorgungsleitung 17 ein aus Fig. 2 erkennbares Bohrloch 18 auszuführen. Dazu dient ein, auch in Fig. 6 erkennbares zylindrisches Anbohrwerkzeug 30, das in dem Innengewinde 13 mit einem im Kopfbereich vorgesehenen Außengewinde 31 verschraubt werden kann. Das Gehäuse 10 ist mit einem Sattel 19 versehen, der an der Umfangsfläche der Versorgungsleitung 17, die ebenfalls aus thermoplastisch erweichbarem Kunststoff besteht, durch Schweißzonen 29 befestigt ist, wofür elektrische Leiter od. dgl. dienen. Zur mechanischen Befestigung des Sattels 19 kann ein ergänzender, in den Fig. nicht näher gezeigter Schellenteil dienen.

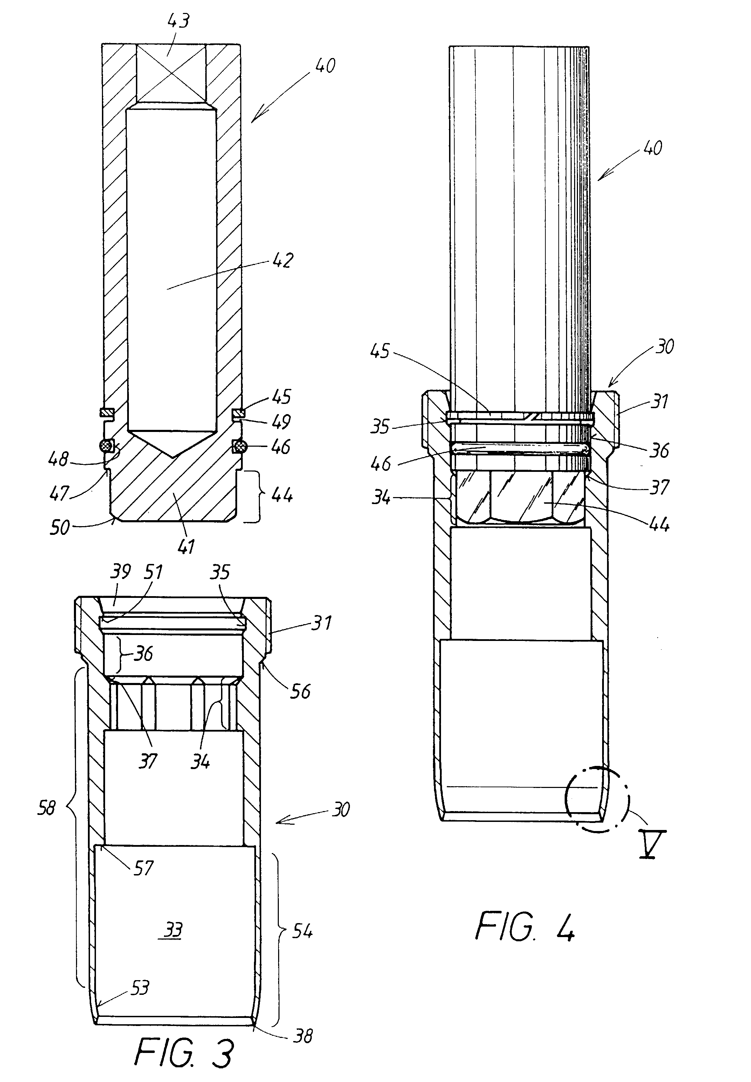

Fig. 6 zeigt die fertige schweißbefestigte Armatur, in welcher unverlierbar das Anbohrwerkzeug 30 montiert ist. Zur Begrenzung nach oben dient dazu ein Anschlagring 32, der in einer Nut der Gewindehülse 14 sitzt und als untere Begrenzung dient eine ebenfalls in der Gewindehülse vorgesehene Innenschulter 28, der sich eine Innennut zur Aufnahme eines oberen Dichtungsrings 27 anschließt. Im unteren Bereich der Gewindehülse 14 befindet sich ein unterer Dichtungsring 26 in einer weiteren Innennut. Wie Fig. 3 zeigt, besitzt das zylindrische Anbohrwerkzeug 30 eine zwar in sich gestufte aber durchgehende Bohrung 33, die eine Druckprobe des an der Versorgungsleitung 17 fertig montierten Armatur-Gehäuses 10 erlaubt. Dazu wird über das freie Ende des Hauptrohres 11 Druckluft ins Gehäuseinnere eingeleitet, die, über das Nebenrohr 12, sich auch an die dort angeschlossene Hauseinführung 15 erstreckt. Ist die Druckprobe erfolgreich abgelaufen, dann kann der Anbohrvorgang gemäß Fig. 2 ausgeführt werden.

Dazu wird zunächst, wie Fig. 1 zeigt, die Kappe 20, die ebenfalls aus Kunststoff od. dgl. besteht, über die aus Fig. 1 erkennbaren Schweißstellen 21, die elektrische Heizleiter umfassen, am Umfang des Hauptrohres 10 festgeschweißt. Wie bereits erwähnt wurde, ist die Kappe 20 Bestandteil eines Ventilaufsatzes, der ein Drehlager 22 für eine darin axialfest drehgelagerte Spindel 23 besitzt. Die Spindel 23 ragt nach außen und dient als Angriff für eine nicht näher gezeigte Drehbetätigung der Spindel. Der im Kappeninneren befindliche Spindelabschnitt 24 ist unrund gestaltet und im vorliegenden Fall als Vierkant ausgebildet. Im Bereich der Spindel 23 und ihres Drehlagers 22 können diverse Dichtungsmittel 25 vorgesehen sein. Als Übergang zwischen der Spindel 23 und dem Anbohrwerkzeug 30 dient ein hülsenförmgier Adapter 40, dessen Aussehen aus Fig. 3 und 4 zu entnehmen ist.

Der Adapter 40 besitzt ein geschlossenes Unterende 41, das das Hülseninnere 42 zu einer Sacklochbohrung umfunktioniert. Das Oberende des Adapters 40 ist mit einer verengten Profilöffnung 43 versehen, die ein zum profilierten Spindelabschnitt 24 komplementäres Konkavprofil besitzt, nämlich im vorliegenden Fall aus einer Vierkantöffnung besteht. Wie Fig. 1 zeigt, wird der Adapter 40 über eine verrastbare 35, 45 Steckkupplung 34, 44 mit dem aus Fig. 3 und 4 erkennbaren Aussehen mit dem Anbohrwerkzeug verbunden. Dazu sind die Mantelfläche des Adapters 40 und die Zylinderbohrung 33 des Anbohrwerkzeugs 30 in folgender, zueinander abgestimmter Weise längsprofiliert.

Beide Bauteile 30, 40 haben zunächst zueinander komplementäre Hälften einer Steckkupplung 34, 44, die im vorliegenden Fall aus einem Stecker 44 am Unterende 41 des Adapters 40 mit unrundem Querschnitt, nämlich einem Sechskantquerschnitt, besteht, dem eine Steckaufnahme 34 mit entsprechend unrundem Öffnungsquerschnitt, nämlich einem Sechskantloch, im Anbohrwerkzeug 30 zugeordnet ist. Die beiden Kupplungshälften 34, 44 werden durch einfaches axiales Einstecken miteinander in Eingriff gebracht, was in Fig. 4 zu erkennen ist. Die Einstecktiefe ist dadurch bestimmt, daß das Anbohrwerkzeug 33, z. B. in der oberen Begrenzung seiner Steckaufnahme 34, einen Innenbund 37 besitzt, an dem der Adapter 40 mit einer radial abgesetzten Schulter 47 zur Anlage kommt, die sich oberhalb des adapterseitigen Steckers 44 befindet.

In der dann folgenden Zone beider Bauteile 30, 40 schließen sich Dichtmittel 36, 46 an. Das adapterseitige Dichtmittel besteht dabei aus einem elastischen Dichtring 46, der in einer Umfangsnut 48 des Adapters 40 positioniert ist. Diesem Dichtring 46 ist im Inneren der Zylinderbohrung 33 eine radiale Anlagefläche 36 zugeordnet. Im Kupplungsfall, gemäß Fig. 4, kommt es zu einer mediendichten Berührung zwischen dem Dichtring 46 und der Anlagefläche 36. Die Anlagefläche 36 kann zum Schneidende 38 des Anbohrwerkzeugs 30 hin sich konisch verjüngen, was die Dichtwirkung verbessert. Eine Dichtwirkung könnte schließlich auch dadurch zustande kommen, daß der Dichtring 46 im Bereich der vorbeschriebenen radialen Schulter 47 angeordnet ist und im Kupplungsfall an den Innenbund 37 des Anbohrwerkzeugs 30 zur Anlage kommt. Die im Ausführungsbeispiel von Fig. 3 und 4 gezeigte Ausbildung der Dichtmittel 36, 46 ist aber weniger störanfällig und effektiver.

Oberhalb der Dichtungszone 36, 46 besitzen die beiden Bauteile 40, 30 die komplementären Rastelemente 35, 45 einer Schnappeingriffsstelle.

Das Rastelement 45 auf Seiten des Adapters 40 besteht dabei aus einem geschlitzten Schnäpperring 45, der in einer entsprechenden Umfangsnut 49 des Adapters 40 positioniert ist. Deswegen ist das entsprechende Gegenrastelement in der Zylinderbohrung 33 des Anbohrwerkzeugs 30 als Innennut 35 gestaltet, vor welcher sich ein trichterförmiger Einlaß 39 für das Adapter-Unterende 41 befindet. Dementsprechend kann das Adapter-Unterende 41 im Kantenbereich eine konische Zuschärfung 50 besitzen. Das erleichtert die Einsteckbewegung beim Kuppeln der beiden Bauteile 30, 40. Die als Gegenrastelement fungierende Innennut 35 ist im vorliegenden Fall, wie aus Fig. 3 hervorgeht, mit einem Hinterschnitt 51 versehen, mit dem der Schnäpperring 35, der einen Rechteckquerschnitt aufweist, nach Art eines Zahnrichtgesperres zusammenwirkt. Das bedeutet, daß der Schnappeingriff durch elastische Verformung zwar leicht zu vollziehen, aber das Trennen der beiden Bauteile 30, 40 in Gegenrichtung erschwert ist.

Wie bereits erwähnt wurde, zeigt Fig. 1 die Anwendung des Armatur-Gehäuses 10 als Ventil-Anbohrarmatur. Durch Rotation 52 der im Adapter 40 steckenden Spindel 23 wird das Anbohrwerkzeug 30 im Inneren des Hauptrohres 11 verschraubt und schneidet, wie aus Fig. 2 zu erkennen ist, einen Bohrkern 16' an der gewünschten, aus Fig. 1 erkennbaren Anbohrstelle 16 in der Versorgungsleitung 17 aus. Der Bohrkern 16' kann dabei durch Innenprofile im aus Fig. 3 erkennbaren zylindrischen Endabschnitt 54 des Anbohrwerkzeugs 30 festgehalten werden. Im vorliegenden Fall ist dafür einfach eine aus Fig. 5 erkennbare Verjüngung 55 des Zylinderendabschnitts 54 verwendet. Diese Verjüngung 55 wirkt sich auch im Umfangsprofil dieses Endabschnitts 54 aus und erleichtert dadurch die Passage der Schneidkante 38 an dem unteren Dichtring 26. Fig. 2 zeigt das Ende der Spindel-Rotation 52. Diese ist dadurch bestimmt, daß ein umfangseitiger Absatz 56, gemäß Fig. 3, am Anbohrwerkzeug 30 an einer entsprechenden Schulter 28, gemäß Fig. 2, zur Anlage kommt. Der obere Dichtring 27 kommt in ähnlicher Weise wie der untere Dichtring 26 an der zylindrischen Umfangszone 58 des Anbohrwerkzeugs 30 zur Anlage und verhindert einen Mediendurchlaß. Die Fig. 2 zeigt dann auch die später mögliche "Ventilfunktion" dieser Anbohrarmatur; es liegt die Absperrposition des Ventils vor. Ein Mediendurchlaß durch das Bohrloch 18 in das Nebenrohr 12 ist verhindert.

Dementsprechend erhält man die Offenstellung des Ventils dadurch, wenn man die Spindel 23 im Gegensinne zum Rotationspfeil 50 von außen durch eine Handhabe od. dgl. betätigt und dadurch das Anbohrwerkzeug 30 wieder in die aus Fig. 1 gezeigte Ausgangsstellung emporschraubt. Dann wäre, nach dem Anschweißen des Bohrlochs 18 von Fig. 2, ein Durchlaß des Mediums aus der Versorgungsleitung 17 in das Nebenrohr 12 des Armatur-Gehäuses 10 gegeben, und zwar durch die Gewindehülse 14 hindurch, die eine seitliche Aussparung 59 zum Nebenrohr 12 hin aufweist. Diese ist in der aus Fig. 2 erkennbaren Verschlußstellung geschlossen. Der untere Dichtring 26 wirkt dann mit der Umfangszone 58 des Anbohrwerkzeugs 30 als Ventilverschluß.

Es versteht sich, daß das Ventil auch in anderer Weise durch übliche Ventilsitze einerseits und Gegenventilflansche andererseits verwirklicht sein könnte. Die konische Verjüngung 55 am unteren Endabschnitt 54 gemäß Fig. 5 verhindert ein Herausfallen des herausgeschnittenen Bohrkerns 16' gemäß Fig. 2 ins Innere der angebohrten Versorgungsleitung 17. Ein Innenabsatz 57 im Inneren der in sich gestuften Zylinderbohrung 33 sorgt dafür, daß der Bohrkern 16' sich nicht weiter nach oben im Anbohrwerkzeug 30 hinaufbewegen kann.

### Bezugszeichenliste:

- 10: Armatur-Gehäuse
- 11: Hauptrohr von 10
- 12: Nebenrohr von 10
- 13: Innengewinde in 11
- 14: Gewindehülse für 13
- 15: Hauseinführung
- 16: Anbohrstelle
- 16': Bohrkern
- 17: Versorgungsleitung
- 18: Bohrloch
- 19: Sattel von 10
- 20: Kappe
- 21: Schweißstelle
- 22: Drehlager für 23
- 23: Spindel
- 24: kantig profilierter Spindelabschnitt
- 25: Dichtungsmittel in 20
- 26: unterer Dichtring
- 27: oberer Dichtring
- 28: Innenschulter von 14
- 29: Schweißzone bei 19
- 30: Anbohrwerkzeug
- 31: kopfseitiges Außengewinde von 30
- 32: Anschlagring für 30 in 14
- 33: Zylinderbohrung in 30
- 34: Steckkupplungshälfte, Steckaufnahme
- 35: Gegenrastelement, Innennut
- 36: erstes Dichtmittel, radiale Anlagefläche
- 37: Innenbund in 30
- 38: Schneidende von 30
- 39: trichterförmiger Einlaß in 33
- 40: hülsenförmiger Adapter
- 41: geschlossenes Unterende von 40
- 42: sacklochförmiges Hülseninneres von 40
- 43: verengtes Einlaßprofil in 42
- 44: unrunder Stecker, Steckkupplungshälfte
- 45: Rastelement, Schnäpperring
- 46: zweites Dichtmittel, Dichtring
- 47: radiale Schulter bei 44
- 48: Umfangsnut für 46
- 49: Umfangsnut für 45
- 50: konische Zuschärfung bei 41
- 51: Hinterschnitt von 35
- 52: Rotationspfeil für 23
- 53: Innenprofil in 54
- 54: Zylinder-Endabschnitt von 30
- 55: gestauchte Verjüngung von 54
- 56: Umfangsabsatz von 30 (Fig. 3)
- 57: Innenabsatz in 54 (Fig. 3)
- 58: zylindrische Umfangszone von 30 (Fig. 3)
- 59: seitliche Aussparung in 14 (Fig. 1)

## Patentansprüche

1. Ventil-Anbohrarmatur für vorzugsweise unter Mediendruck stehende Versorgungsleitungen (17) aus Kunststoff,
mit über die anzubohrende Stelle (16) der Leitung (17) zu positionierenden Gehäuse (10) mit einem Hauptrohr (11) und mit einem Nebensrohr (12),
wobei das Hauptrohr (11) mit einem Innengewinde (13) versehen ist und im Bereich eines der Leitung zugekehrten Unterendes eine Ventil-Dichtstelle (38) aufweist,
mit einem im Innengewinde (13) des Hauptrohres (11) verschraubbaren, zylindrischen Anbohrwerkzeug (30), welches eine Ventil-Gegendichtstelle (58) besitzt,
und das Anbohrwerkzeug (30) zu seiner Drehbetätigung (52) über eine verrastbare (34, 45), ein Drehmoment übertragende, zwei Kupplungshölften aufweisende Steckkupplung (34, 44) mit einem hülsenförmigen Adapter (40)verbindbar ist,
und mit einem vormontierten Ventilaufsatz, bestehend aus einer am Hauptrohr (11) befestigbaren (21) Kappe (20),
und aus einer in der Kappe (20) axial drehgelagerten, von außen drehbaren Spindel (23), die zwar in den hülsenförmigen Adapter (40) axial frei einschiebbar ist, dann aber mit dem Adapter (40) eine drehfeste Verbindung aufweist,
**dadurch gekennzeichnet,**
daß das Hülseninnere (42) des Adapters (40) zum Anbohrwerkzeug (30) hin geschlossen ist
und daß zwischen dem Adapter (40) und dem Anbohrwerkzeug (30), neben den Kupplungshälften (34, 44) der Steckkupplung, Dichtmittel (36, 46) für das Medium der anzubohrenden Leitung (17) angeordnet sind.

2. Ventil-Anbohrarmatur nach Anspruch 1, dadurch gekennzeichnet, daß die Dichtmittel (36, 46) in einem axialen Versatz sowohl zur Schnappeingriffsstelle (35, 45) der Steckkupplung als auch zur Drehmitnahmestelle (34, 44) angeordnet sind.

3. Ventil-Anbohrarmatur nach Anspruch 1 oder 2, dadurch gekennzeichnet, daß die Dichtmittel (36, 46) zwischen der Schnappeingriffsstelle (35, 45) und der das Drehmoment übertragenden Mitnahmestelle (34, 44) der Steckkupplung liegen.

4. Ventil-Anbohrarmatur nach einem oder mehreren der Ansprüche 1 bis 3, dadurch gekennzeichnet, daß das Dichtmittel aus einem elastischen Dichtring (46) besteht, der in einer am Endabschnitt des Adapters (40) vorgesehenen Umfangsnut (48) angeordnet ist und das Unterende des Adapters (40) die Steckhälfte (44) der Kupplung bildet.

5. Ventil-Anbohrarmatur nach Anspruch 4, dadurch gekennzeichnet, daß dem Dichtring (46) eine radiale Anlagefläche (36) im Inneren (33) des Anbohrwerkzeugs (30) zugeordnet ist, das Anbohrwerkzeug (30) die Aufnahmehälfte (34) der Steckkupplung bildet und die radiale Anlagefläche (36) oberhalb eines Innenbundes (37) im Anbohrwerkzeug (30) angeordnet ist, wobei im Kupplungsfall der Innenbund (37) an einer radial abgesetzten Schulter (47) am Ende des Adapters (40) anschlägt und der Dichtring (46) mediendicht an der radialen Anlagefläche (36) zu liegen kommt.

6. Ventil-Anbohrarmatur nach Anspruch 5, dadurch gekennzeichnet, daß die radiale Anlagefläche (36) in Steckrichtung des Adapters (40) hin konisch abnimmt.

7. Ventil-Anbohrarmatur nach einem oder mehreren der Ansprüche 1 bis 6, dadurch gekennzeichnet, daß der Endabschnitt (54) des Anbohrwerkzeugs (30) sich zu seiner Schneidkante (38) hin verjüngt.

8. Ventil-Anbohrarmatur nach Anspruch 7, dadurch gekennzeichnet, daß die Verjüngung (55) des Anbohrwerkzeugs (30) zugleich als Ventil-Gegendichtstelle dient und das fertige Bohrloch (18) der Kunststoff-Leitung (17) zugleich die damit zusammenwirkende Ventil-Dichtstelle bildet.

## Claims

1. Tapping device with valve for plastic supply pipes (17) preferably under pressure,
with a housing (10) to be positioned above the location (16) to be tapped in the pipe (17) with a main pipe (11) and a branch pipe (12),
the main pipe (11) being provided with a tapping (13) and exhibiting a valve seal point (38) in the area of the bottom end facing towards the pipe,
with a cylindrical tapping tool (30) which can be screwed into the tapping (13) of the main pipe (11) and which has a mating valve seal point (38),
and the tapping tool (30) can be connected for its rotary activation (52) to a sleeve-shaped adapter (40) by means of an engageable (34, 35) plug coupling (34, 44) which has two coupling halves and transmits a torque,
and with a pre-assembled valve lantern comprising a cap (20) attachable (21) to the main pipe (11),
and comprising a spindle (23) which can be rotated externally and is axially pivot-mounted in the cap (20), and said spindle can be freely inserted axially into the sleeve-shaped adapter (40) but then forms a non-rotating connection with the adapter (40),
characterised in that
the sleeve interior (42) of the adapter (40) is closed towards the tapping tool (30),
and that a seal (36, 46) for the medium in the pipe to be tapped (17) is arranged between the adapter (40) and the tapping tool (30), beside the coupling halves (34, 44).

2. A tapping device with valve according to claim 1, characterised in that the seals (36, 46) are arranged in an axially offset position both in relation to the snap engagement point (35, 45) of the plug coupling and to the rotary driving location (34, 44).

3. A tapping device with valve according to claim 1 or 2, characterised in that the seals (36, 46) are located between the snap engagement point (35, 45) and the driving location (34, 44) of the plug coupling transmitting the torque.

4. A tapping device with valve according to one or more of claims 1 to 3, characterised in that the seals are made of an elastic O-ring (46) which is arranged in a circumferential groove (48) provided in the end section of the adapter (40) and the bottom end of the adapter (40) forms the plug half (44) of the coupling.

5. A tapping device with valve according to claim 4, characterised in that a radial contact surface (36) in the interior (33) of the tapping tool (30) is assigned to the seal (46), the tapping tool (30) forms the female half (34) of the plug coupling and the radial contact surface (36) is arranged above an internal collar (37) in the tapping tool (30), whereby, in the case of coupling, the internal collar (37) hits against a radially stepped shoulder (47) at the end of the adapter (40) and the seal (46) comes to rest at the radial contact surface (36), thus sealing the medium.

6. A tapping device with valve according to claim 5, characterised in that the radial contact surface (36) decreases conically in the plugging direction of the adapter (40).

7. A tapping device with valve according to one or more of claims 1 to 6, characterised in that the end section (54) of the tapping tool (30) tapers towards its cutting edge (38).

8. A tapping device with valve according to claim 7, characterised in that the taper (55) of the tapping tool (30) serves at the same time as a mating valve seal point and the finished bore (18) of the plastic pipe (17) at the same time forms the thus interacting valve seal point.

## Revendications

1. Ensemble de valve relié par perçage pour des conduites d'alimentation (17), placées de préférence sous la pression d'un fluide et réalisées en matière plastique ou synthétique,
avec un corps (10), à positionner sur l'emplacement (16) à percer de la conduite (17) et doté d'un tube principal (11) et d'un tube annexe (12),
dans lequel le tube principal (11) est muni d'un filetage intérieur (13) et présente dans la zone d'une extrémité inférieure, tournée vers la conduite, un emplacemcnt d'étanchéité de valve ou de robinet (38),
avec un outil de perçage (30) cylindrique, pouvant être vissé dans le filetage intérieur(13) du tube principal(11) et comportant un contre-emplacement d'étanchéité de valve (58),
et dans lequel l'outil de perçage (30) est susceptible d'être relié à son actionnement de rotation (52), par l'intermédiaire d'un accouplement à enfichage (34, 44) présentant deux moitiés d'accouplement encliquetables (34, 45), transmettant un couple avec un adaptateur (40) en forme de douille,
et avec une tête de valve prémontée, constituée d'un capuchon (20) pouvant être fixé (21) sur le tube principal (11),
et d'une broche (23) susceptible d'être entraînée en rotation depuis l'extérieur, montée rotative axialement dans le capuchon (20), et susceptible d'être insérée de façon axialement libre dans l'adaptateur (40) en forme de douille, mais relié ensuite fermement en rotation avec l'adaptateur (40),
caractérisé en ce que
l'intérieur de douille (42) de l'adaptateur (40) est fermé vis-à-vis de l'outil de perçage (30),
et en ce que, entre l'adaptateur (40) et l'outil de perçage (30), sont disposés à côté les demi-accouplements (34, 44) de l'accouplement à enfichage, des moyens d'étanchéité (36. 48) pour le fluidc de la conduite (17) à percer.

2. Ensemble de valve relié par perçage selon la revendication 1, caractérisé en ce que les moyens d'étanchéité (36, 46) sont décalés axialement, aussi bien par rapport à l'emplacement d'engagement d'encliquetage (35, 45) de l'accouplement à enfichage qu'également par rapport à l'emplacement d'entraînement en rotation (34, 44).

3. Ensemble de valve relié par perçage selon la revendication 1 ou 2, caractérisé en ce que les moyens d'étanchéité (36, 46) sont situés entre l'emplacement d'engagement d'encliquetage (35, 45) et l'emplacement d'entraînement (34, 44) transmettant le couple de rotation.

4. Ensemble de valve relié par perçage selon une ou plusieurs des revendications 1 à 3, caractérisé en ce que les moyens d'étanchéité sont constitués d'une bague d'étanchéité (46) élastique qui est disposée dans une gorge périphérique (48) prévue sur le tronçon d'extrémité de l'adaptateur (40) et en ce que l'extrémité inférieure de l'adaptateur (40) constitue le demi-élément à enficher (44) de l'accouplement.

5. Ensemble de valve relié par perçage selon la revendication 4, caractérisé en ce qu'est associée à la bague d'étanchéité (48) une surface d'appui radiale (36) à l'intérieur (33) de l'outil de perçage (30), en ce que l'outil de perçage (30) constitue la moitié de logement (34) de l'accouplement à enfichage et la surface d'appui radiale (36) est disposée au-dessus d'une collerette intérieure (37) dans l'outil de perçage (30), et en ce que la collerette intérieure (37) vient en butée, en position d'accouplement, sur un épaulement (47) radialement en retrait à l'extrémité de l'adaptateur (40), et la bague d'étanchéité (46) vient se placer de façon étanche aux fluides sur la face d'appui radiale (36).

6. Ensemble de valve relié par perçage selon la revendication 5, caractérisé en ce que la surface d'appui radiale (36) va en diminuant comiquement dans la direction d'cnfichage de l'adaptateur (40).

7. Ensemble de valve relié par perçage selon l'une ou plusieurs des revendications 1 à 6, caractérisé en ce que le tronçon d'extrémité (54) de l'outil de perçage (30) va en s'effilant vers son arête de coupe (38).

8. Ensemble de valve relié par perçage selon la revendication 7, caractérisé en ce que l'effilement (55) de l'outil de perçage (30) sert simultanément d'emplacement d'étanchéité conjugué de valve et en ce que le trou de perçage (18) achevé de la conduite en matière plastique (7) forme simultanément l'emplacement d'étanchéité de valve coopérant.
